# FASCICULE DE BREVET EUROPEEN

(11) **EP 3 243 271 B1**
(45) Date de publication et mention de la délivrance du brevet: **13.02.2019**
(21) Numéro de dépôt: 15823614.1
(22) Date de dépôt: 08.12.2015
(51) Int. Cl.: H02P 29/66, H02P 29/68, H02P 9/30, H02P 29/032, H02P 9/48

(54) **DISPOSITIF DE PILOTAGE D'UN ALTERNATEUR DE VÉHICULE AUTOMOBILE ET ALTERNATEUR CORRESPONDANT**
VORRICHTUNG ZUR STEUERUNG EINES WECHSELSTROMGENERATORS EINES KRAFTFAHRZEUGS UND ENTSPRECHENDER WECHSELSTROMGENERATOR
DEVICE FOR CONTROLLING A MOTOR VEHICLE ALTERNATOR AND CORRESPONDING ALTERNATOR

(30) Priorité: 06.01.2015 FR 1550063
(43) Date de publication de la demande: 15.11.2017
(73) Titulaire: Valeo Equipements Electriques Moteur, 94046 Créteil Cedex (FR)
(72) Inventeur: CHASSARD, Pierre, 94046 Créteil Cedex (FR); TISSERAND, Pierre, 94046 Créteil Cedex (FR); GAUTRU, Jean-François, 94046 Créteil Cedex (FR); FAVEROLLE, Pierre, 94046 Créteil Cedex (FR); DUBUS, Jean-Marc, 94046 Créteil Cedex (FR); CANITROT, Nathalie, 94046 Créteil Cedex (FR); VERA, Thomas, 94046 Créteil Cedex (FR); GODEFROY, Gregory, 94046 Créteil Cedex (FR)
(74) Mandataire: Duprez, Richard
(86) Numéro de dépôt international: PCT/FR2015/053375
(87) Numéro de publication internationale: WO 2016/110619

(56) Documents cités:
- EP-A1- 0 462 503
- WO-A1-2012/032239
- DE-A1-102007 012 702
- FR-A1- 2 802 363

## Description

### DOMAINE TECHNIQUE DE L'INVENTION.

La présente invention concerne un dispositif de pilotage d'un alternateur de véhicule automobile. L'invention concerne aussi l'alternateur comportant ce dispositif de pilotage.

### ARRIERE PLAN TECHNOLOGIQUE DE L'INVENTION.

Afin de faire face à l'augmentation de la puissance que doit aujourd'hui délivrer un alternateur, ou alterno-démarreur, de véhicule automobile du fait de l'accroissement de la consommation des équipements embarqués, on tend à utiliser des tensions nominales de réseau de bord de l'ordre de 42 V au lieu de 14 V afin de fournir des puissances de l'ordre de 4 kW à 10 kW.

Par ailleurs, même si la tension nominale du réseau de bord reste de 14 V, il peut être souhaitable dans certains cas d'accroître ponctuellement la performance en débit d'un alternateur en augmentant une intensité d'un courant d'excitation circulant dans un rotor de l'alternateur.

Dans la demande de brevet FR2802363, la société VALEO EQUIPEMENTS ELECTRIQUES MOTEUR propose pour ce faire de surexciter le rotor par un circuit hacheur élévateur de tension à partir du réseau de bord.

Une boucle d'asservissement permet de maintenir le courant d'excitation à des valeurs imposant en permanence à l'alternateur d'être à une température inférieure à une température maximale admissible pour celui-ci et ses composants.

Une autre façon d'augmenter la performance en débit d'un alternateur standard est de diminuer l'impédance d'un enroulement d'excitation du rotor, ce qui a pour effet d'augmenter le courant d'excitation pour une même tension nominale du réseau de bord.

Cette façon de procéder est avantageuse dans une opération d'abaissement en gamme (désignée par le terme "downsizing" en anglais), c'est-à-dire quand on cherche à utiliser dans un véhicule d'une certaine catégorie un équipement d'un véhicule d'une catégorie inférieure en "boostant" ses caractéristiques.

Mais, dans le cas d'un alternateur fonctionnant en sur-régime, désigné également par les termes alternateur "boosté", se pose évidemment à l'équipementier le problème de l'équilibre thermique de la machine, l'augmentation des courants augmentant corrélativement les pertes telles que les pertes Joule et les pertes fer, par exemple.

### DESCRIPTION GENERALE DE L'INVENTION.

La présente invention vise donc à résoudre la problématique thermique exposée ci-dessus.

Selon un premier aspect, l'invention concerne un dispositif de pilotage d'un alternateur de véhicule automobile asservissant une tension continue générée par cet alternateur à une consigne de tension prédéterminée.

Cette tension continue est asservie en contrôlant un courant circulant dans un circuit d'excitation comportant un enroulement d'excitation d'un rotor de l'alternateur.

Ce dispositif de pilotage est du type de ceux connus en soi maintenant en outre au moins une température courante des composants de l'alternateur en dessous d'au moins une température maximale admissible prédéterminée.

Le dispositif de pilotage d'un alternateur de véhicule automobile selon l'invention comprend une boucle d'asservissement comportant:
- des moyens d'acquisition de la tension continue générée et fournissant une tension mesurée;
- un premier soustracteur de cette tension mesurée de la consigne de tension générant une erreur de tension;
- des moyens de conditionnement de cette erreur de tension;
- un module de saturation fournissant en fonction de l'erreur de tension en entrée un pourcentage d'excitation en sortie limité à un pourcentage d'excitation maximal admissible;
- un générateur d'un signal modulé en largeur d'impulsion présentant un rapport cyclique égal au pourcentage d'excitation;
- un commutateur à semi-conducteur piloté par le signal modulé en largeur d'impulsion contrôlant l'intensité du courant d'excitation;

Le dispositif de pilotage selon l'invention comprend en outre une boucle d'asservissement en température comportant:
- au moins un capteur de température fournissant au moins une température courante des composants;
- au moins un second soustracteur de cette température courante d'au moins une température maximale admissible générant au moins une erreur de température;
- une module de commande fournissant le pourcentage d'excitation maximal admissible en fonction de cette erreur de température selon une loi de commande prédéterminée.

Dans un premier mode de réalisation du dispositif de pilotage d'un alternateur de véhicule automobile selon l'invention, la température courante est une température courante de carcasse d'une carcasse de cet alternateur ou bien une température courante de palier d'un palier arrière de cet alternateur ou bien une température courante de jonction d'une jonction du commutateur à semi-conducteur, la température maximale admissible est une température maximale admissible de carcasse prédéterminée ou bien une température maximale admissible de palier prédéterminée ou bien une température maximale admissible de jonction prédéterminée, et le capteur de température est un capteur de température de carcasse ou bien un capteur de température de palier ou bien un capteur de température de jonction.

Dans un second mode de réalisation du dispositif de pilotage d'un alternateur de véhicule automobile selon l'invention, la boucle d'asservissement en température comporte:
- un groupe de capteurs formé de plusieurs premiers exemplaires de ce capteur de température;
- plusieurs deuxièmes exemplaires de ce second soustracteur générant un ensemble d'erreurs formé par plusieurs troisièmes exemplaires de cette erreur de température en soustrayant respectivement des éléments d'un groupe de températures courantes fournies par ce groupe de capteurs des éléments d'un groupe de températures maximales admissibles formées de plusieurs quatrièmes exemplaires de cette température maximale admissible;
- des moyens de détermination d'une erreur maximale parmi cet ensemble d'erreurs;
- un sélecteur fournissant cette erreur maximale au module de commande.

Dans le dispositif de pilotage d'un alternateur de véhicule automobile selon l'invention:
- le groupe de capteurs comprend au moins plusieurs éléments choisis parmi un premier capteur d'une première température d'un stator de l'alternateur, un deuxième capteur d'une deuxième température d'une carcasse de l'alternateur, un troisième capteur d'une troisième température des diodes de redressement des courants de phases de l'alternateur, un quatrième capteur d'une quatrième température du rotor, un cinquième capteur d'une cinquième température d'une jonction du commutateur à semi-conducteur;
- le groupe de températures courantes comprend au moins plusieurs valeurs courantes choisies parmi les première, seconde, troisième, quatrième et cinquième températures;
- le groupe de températures maximales admissibles comprend au moins plusieurs valeurs de référence choisies parmi des première, seconde, troisième, quatrième et cinquième températures maximales admissibles correspondant aux première, seconde, troisième, quatrième et cinquième températures.

Dans ce second mode de réalisation de l'invention, la consigne de tension est fonction de la cinquième température.

Dans l'un et l'autre modes de réalisation de l'invention, les moyens de conditionnement de l'erreur de tension comprennent des moyens de filtrage et d'ajustement d'un gain.

La boucle d'asservissement en tension et la boucle d'asservissement en température sont numériques.

Selon l'invention encore, le dispositif de pilotage forme un ensemble monolithique intégrant ledit commutateur à semi-conducteur.

Selon un autre aspect, l'invention concerne aussi un alternateur de véhicule automobile comprenant un dispositif de pilotage tel que décrit précédemment.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

Les **Figures 1a et 1b** montrent des relevés de débits et de températures en fonction d'une vitesse de rotation d'alternateurs connus de l'état de la technique présentant un équilibre thermique non critique et critique, respectivement.
La **Figure 2** est un schéma de principe d'un dispositif de pilotage d'un alternateur de véhicule automobile selon un premier mode de réalisation préféré de l'invention.
Les **Figures 3a et 3b** sont respectivement un graphe représentant une loi de commande définissant un pourcentage d'excitation admissible et un autre graphe représentant une fonction de saturation résultant de cette loi de commande.
La **Figure 4a** établit une comparaison entre les relevés de débits et de températures d'un alternateur standard (traits fins) et d'un alternateur similaire muni d'un dispositif de pilotage selon l'invention (traits épais), et les **Figure 4b et 4c** montrent respectivement le pourcentage d'excitation maximale admissible pour l'un et l'autre de ces alternateurs.
La **Figure 5** est un schéma de principe d'un dispositif de pilotage d'un alternateur de véhicule automobile selon un second mode de réalisation préféré de l'invention.

### DESCRIPTION DES MODES DE REALISATION PREFERES DE L'INVENTION.

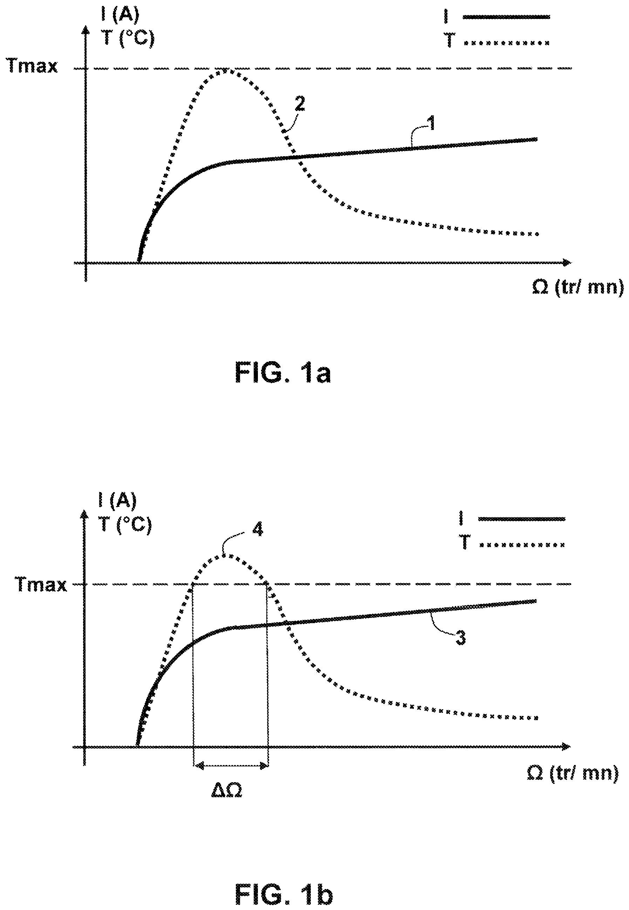

La courbe en trait plein 1 de la **Figure 1a** représente la caractéristique d'un débit I d'un alternateur en fonction de sa vitesse de rotation Ω pour une excitation maximale (dite «plein champ») à une température ambiante maximale (par exemple 125°C) et à une tension de fonctionnement imposée (par exemple 13.5V).

La température alternateur «fer» T, c'est-à-dire en un point de la carcasse, peut alors être relevée pour différentes vitesses de rotation Ω du rotor en des points dit «stabilisés»; la courbe résultante est également montrée en trait pointillé 2 sur la **Figure 1a****.**

Un alternateur qui possède un bon équilibre thermique possède une température «fer» T qui ne dépasse pas le seuil de température maximale admissible « fer » Tₘₐₓ. Cet équilibre thermique est alors non critique pour les conditions de fonctionnement précédemment citées.

Dans le cas d'une machine où la performance en débit I est augmentée (alternateur « boosté ») comme le montre l'autre courbe en trait plein 3 de la **Figure 1b****,** en diminuant l'impédance d'un enroulement d'excitation du rotor, par exemple, ce qui a pour effet d'augmenter un courant d'excitation, la température «fer» T dépasse le seuil de température maximale admissible Tₘₐₓ dans les conditions de fonctionnement précitées sur une plage de vitesse ΔΩ dite « critique en température», comme le montre également l'autre courbe en pointillé 4..

Dans ces conditions, les moyens de refroidissement de l'alternateur n'arrivent pas à évacuer la chaleur due aux différentes pertes.

L'équilibre thermique de la machine est alors considéré comme rompu. Une durée trop longue de fonctionnement de l'alternateur dans la plage de vitesse critique en température ΔΩ est susceptible d'engendrer une destruction de la machine par une température excessive.

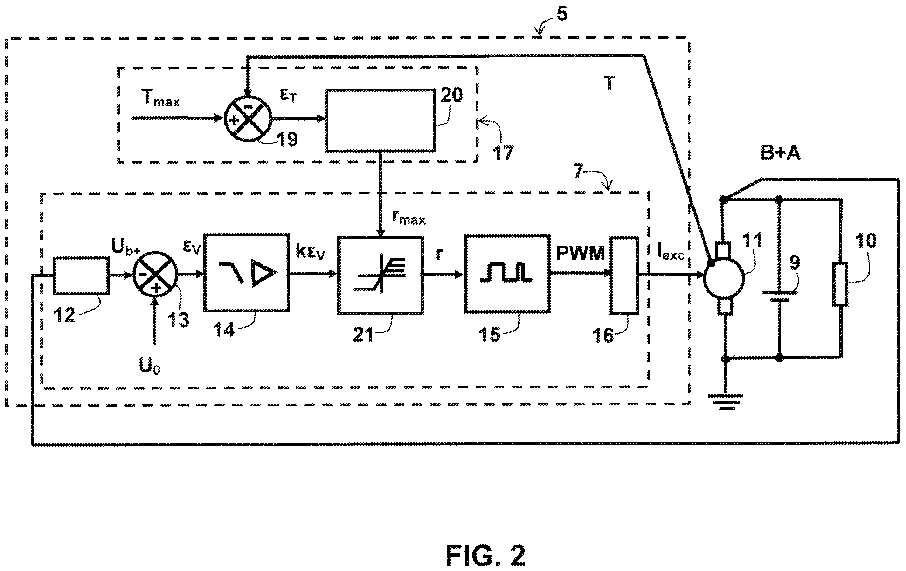

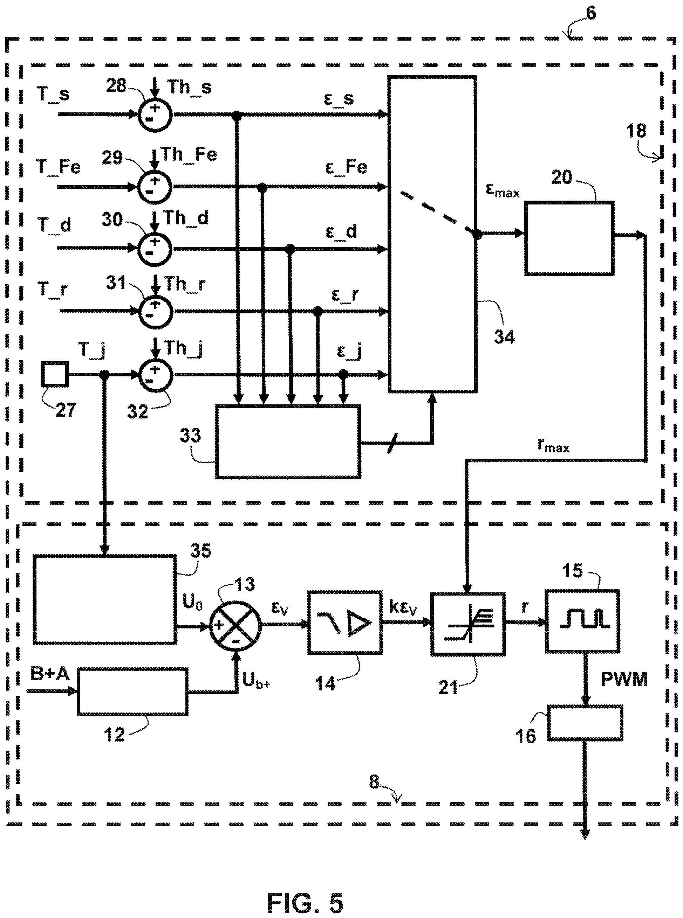

Le dispositif de pilotage 5, 6 d'un alternateur selon l'invention, dont les schémas de principe des premier et second modes de réalisation préférés sont donnés respectivement sur les **Figures 2** **et** **5****,** s'attache essentiellement au problème de la stabilité thermique d'un alternateur "boosté".

Pour résoudre la problématique thermique de l'alternateur, une solution proposée par l'entité inventive est l'utilisation du régulateur 5, 6 afin de contrôler au moins une température courante T de l'alternateur à l'aide d'au moins un capteur placé sur au moins des composants de l'alternateur (par exemple le fer d'un stator ou sur un palier arrière de la machine pour mesurer des températures des diodes).

De manière connue en soi, ce régulateur 5, 6 comprend une boucle d'asservissement en tension 7, 8 permettant d'asservir à une consigne de tension U₀ une tension continue B+A d'un réseau de bord du véhicule, comprenant en général une batterie 9 et divers équipements 10, alimenté par l'alternateur 11.

Classiquement cette boucle d'asservissement en tension 7, 8 comporte:
- des moyens d'acquisition 12 de la tension continue B+A prise sur une borne positive de l'alternateur 11 fournissant une tension mesurée U_{b+};
- un premier soustracteur 13 de la tension mesurée U_{b+} de la consigne de tension U₀ générant une erreur de tension εᵥ;
- des moyens de conditionnement 14 de cette erreur de tension εᵥ par filtrage et adaptation de gain k;
- un générateur 15 d'un signal modulé en largeur d'impulsion PWM présentant un rapport cyclique r égal à un pourcentage d'excitation fonction de l'erreur de tension εᵥ et pilotant un commutateur à semi-conducteur 16 contrôlant l'intensité d'excitation I_{exc}.

Selon l'invention, le régulateur 5, 6 comprend en outre une boucle d'asservissement en température 17, 18.

Dans le premier mode de réalisation préféré, dont le schéma de principe est représenté sur la **Figure 2****,** cette boucle d'asservissement en température 17 comporte un capteur de température fournissant la température courante T d'un des composants de l'alternateur 11.

Ce peut être un capteur externe au régulateur 5, placé sur le fer du stator ou sur le palier arrière pour mesurer la température des diodes, ou alternativement, un capteur interne au régulateur 5, mesurant une température de jonction du commutateur à semi-conducteur 16.

Un second soustracteur 19 de la température courante T d'une température maximale admissible prédéterminée Tₘₐₓ génère une erreur de température ε_{T} à partir de laquelle un module de commande 20 fournit à la boucle d'asservissement en tension 7 un pourcentage d'excitation maximal admissible rₘₐₓ permettant de maintenir la température courante T de l'alternateur 11 en dessous de la température maximale admissible prédéterminée Tₘₐₓ tout en assurant une régulation en tension.

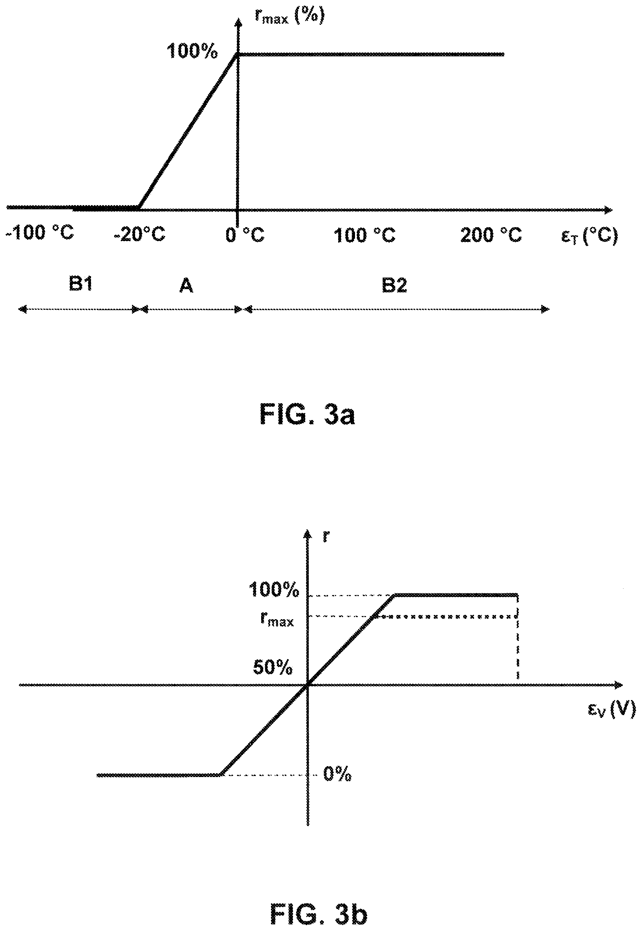

Un exemple de loi de commande définissant le pourcentage d'excitation maximal admissible rₘₐₓ en fonction de l'erreur de température ε_{T} est représentée sur la **Figure 3a**.

Dans cet exemple, dans une zone linéaire A, une pente du pourcentage d'excitation maximal admissible rₘₐₓ en fonction de l'erreur de température ε_{T} est d'environ -5%/ °C.

Dans la zone linéaire A, la pente peut être adaptée afin d'obtenir un gain de boucle de régulation en température plus ou moins important suivant une précision de température limitée souhaitée.

Dans une autre zone B1 de la loi de commande, où l'erreur de température ε_{T} est comprise entre -100°C et -20°C, l'alternateur 11 est à une température courante T très supérieure à la température maximale admissible prédéterminée Tₘₐₓ et l'excitation est coupée (pourcentage d'excitation maximal admissible rₘₐₓ nul).

Si l'erreur de température ε_{T} est positive (zone B2 de la loi de commande), la température courante T très inférieure à la température maximale admissible prédéterminée Tₘₐₓ et l'excitation ne dépend que de la boucle d'asservissement en tension 7 (pourcentage d'excitation maximal admissible rₘₐₓ de 100%).

Le pourcentage d'excitation maximal admissible rₘₐₓ fourni par le module de commande 20 est appliqué à un module de saturation 21 inséré en série dans la boucle d'asservissement en tension 7, entre les moyens de conditionnement 14 de l'erreur de tension εᵥ et le générateur du signal modulé en largeur d'impulsion 15.

La fonction de saturation qui en résulte est représentée sur la **Figure 3b**. Le pourcentage d'excitation r en sortie qui est fonction de l'erreur de tension εᵥ en entrée est au plus égal au pourcentage d'excitation maximal admissible rₘₐₓ fourni par le module de commande 20.

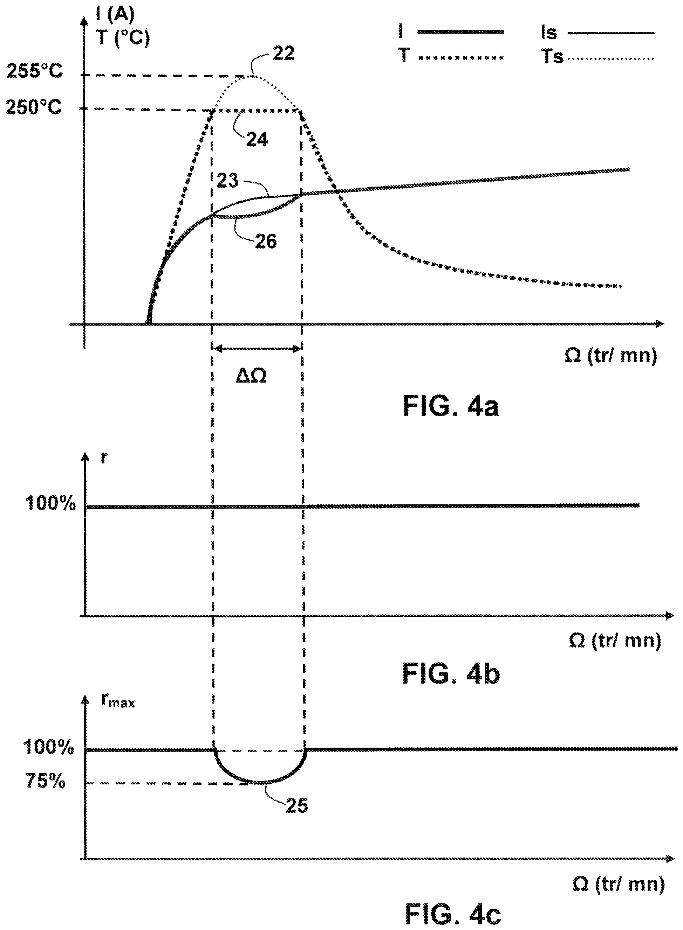

Les **Figures 4a, 4b et 4c** montrent l'effet de la boucle d'asservissement en température 17 pour un alternateur 11 muni du dispositif de pilotage 5 selon l'invention par comparaison à un alternateur standard présentant un équilibre thermique critique dans une plage de vitesse critique ΔΩ sans le dispositif de pilotage 5 selon l'invention.

Pour l'alternateur standard, la température courante Ts (trait pointillé fin) dépasse 250°C et atteint 255 °C dans la plage de vitesse critique ΔΩ quand le débit Is (trait plein fin 23) augmente en fonction de la vitesse de rotation Ω comme le montre bien la **Figure 4a****.** quand l'excitation reste "plein champ" (**Figure 4b**).

Pour l'alternateur 11 selon l'invention, la température courante T (trait pointillé épais 24) reste inférieure à 250°C.

Du fait de l'asservissement en température, l'excitation 25 ne reste pas "plein champ" dans la plage de vitesse critique ΔΩ, mais diminue de 25%. Le débit 1 (trait plein épais 26) de l'alternateur selon l'invention est plus faible que le débit Is de l'alternateur standard, mais le maintient de l'alternateur 11 en dessous de 250 °C permet de préserver l'intégrité de ses composants.

Dans le second mode de réalisation préféré de l'invention, dont le schéma de principe est représenté sur la **Figure 5****,** la boucle d'asservissement en température 18 comporte plusieurs capteurs de température fournissant plusieurs températures courantes de plusieurs composants de l'alternateur 11 :
- un premier capteur d'une première température T_s du stator de l'alternateur 11 ;
- un deuxième capteur d'une deuxième température T_Fe de la carcasse de l'alternateur 11 ;
- un troisième capteur d'une troisième température T_d du palier arrière de l'alternateur 11, c'est-à-dire des diodes de redressement des courants de phases agencées sur ce palier;
- un quatrième capteur d'une quatrième température T_r du rotor;
- un cinquième capteur d'une cinquième température d'une jonction 27 du commutateur à semi-conducteur 16.

Ces première, deuxième, troisième, quatrième et cinquième températures T_s, T_Fe, T_d, T_r, T_j sont soustraites respectivement de première, deuxième, troisième, quatrième et cinquième températures maximales admissibles Th_s, Th_Fe, Th_d, Th_r, Th_j par des premier, deuxième, troisième, quatrième et cinquième seconds soustracteurs 28, 29, 30, 31, 32 formant un ensemble de première, deuxième, troisième, quatrième et cinquième erreurs de température ε_s, ε_Fe, ε_d, ε_r, ε_j.

Des moyens de détermination 33 d'une erreur maximale εₘₐₓ parmi cet ensemble commandent un sélecteur 34 fournissant cette erreur maximale εₘₐₓ au module de commande 20 pour déterminer le pourcentage d'excitation maximal admissible rₘₐₓ qui limite, au moyen du module de saturation 21, le pourcentage d'excitation r calculé par la boucle d'asservissement en tension 8.

Dans ce second mode de réalisation de l'invention, un module de référence de tension 35 pilotable par la cinquième température T_j de la jonction du commutateur à semi-conducteur 16 fournit la consigne de tension U₀ à la boucle d'asservissement en tension 8, en diminuant une consigne de tension initiale à un taux d'environ - 5 mV/ °C.

Comme il va de soi, l'invention ne se limite pas aux seuls modes d'exécution préférentiels décrits ci-dessus.

Notamment, les valeurs particulières des températures, pente ou taux spécifiées ci-dessus ne sont données qu'à titre d'exemples.

Il en est de même des composants particuliers de l'alternateur 11, stator, carcasse, palier, rotor ou commutateur dont les températures courantes sont mesurées. Ces composants pourraient, en variante, être remplacés par d'autres composants de l'alternateur 11 dont le maintien sous un seuil de température prédéterminé permettrait d'améliorer la fiabilité de l'alternateur 11.

L'invention embrasse donc au contraire toutes les variantes possibles de réalisation qui resteraient dans le cadre défini par les revendications ci-après.

## Revendications

1. Dispositif de pilotage (5, 6) d'un alternateur (11) de véhicule automobile du type de ceux asservissant une tension continue (B+A) générée par ledit alternateur (11) à une consigne de tension prédéterminée (U₀) en contrôlant l'intensité d'un courant d'excitation (I_{EXC}) circulant dans un circuit d'excitation comportant un enroulement d'excitation d'un rotor dudit alternateur (11) et maintenant en outre au moins une température courante (T) des composants dudit alternateur (11) en dessous d'au moins une température maximale admissible prédéterminée (Tₘₐₓ), **caractérisé en ce qu'**il comprend une boucle d'asservissement en tension (7, 8) comportant:
- des moyens d'acquisition (12) de ladite tension continue (B+A) fournissant une tension mesurée (U_{b+});
- un premier soustracteur (13) de ladite tension mesurée (U_{b+}) de ladite consigne de tension (U₀) générant une erreur de tension (εᵥ);
- des moyens de conditionnement (14) de ladite erreur de tension (εᵥ);
- une module de saturation (21) fournissant en fonction de ladite erreur de tension (εᵥ) en entrée un pourcentage d'excitation (r) en sortie limité à un pourcentage d'excitation maximal admissible (rₘₐₓ);
- un générateur (15) d'un signal modulé en largeur d'impulsion (PWM) présentant un rapport cyclique égal audit pourcentage d'excitation (r);
- un commutateur à semi-conducteur (16) piloté par ledit signal modulé en largeur d'impulsion (PWM) contrôlant ladite intensité (I_{EXC});
et **en ce qu'**il comprend en outre une boucle d'asservissement en température (17, 18) comportant:
- au moins un capteur de température fournissant ladite au moins une température courante (T) desdits composants;
- au moins un second soustracteur (19) de ladite au moins une température courante (T) de ladite au moins une température maximale admissible (Tₘₐₓ) générant au moins une erreur de température (ε_{T});
- un module de commande (20) fournissant ledit pourcentage d'excitation maximal admissible (rₘₐₓ) en fonction de ladite au moins une erreur de température (ε_{T}) selon une loi de commande prédéterminée.

2. Dispositif de pilotage (5) d'un alternateur (11) de véhicule automobile selon la revendication 1 précédente, **caractérisé en ce que** ladite au moins une température courante (T) est une température courante de carcasse d'une carcasse dudit alternateur (11) ou bien une température courante de palier d'un palier arrière dudit alternateur (11) ou bien une température courante de jonction d'une jonction (27) dudit commutateur à semi-conducteur (16), ladite au moins une température maximale admissible (Tₘₐₓ) est une température maximale admissible de carcasse prédéterminée ou bien une température maximale admissible de palier prédéterminée ou bien une température maximale admissible de jonction prédéterminée, et ledit au moins un capteur de température est un capteur de température de carcasse ou bien un capteur de température de palier ou bien un capteur de température de jonction.

3. Dispositif de pilotage (6) d'un alternateur (11) de véhicule automobile selon la revendication 1 précédente, **caractérisé en ce que** ladite boucle d'asservissement en température (18) comporte:
- un groupe de capteurs formé de plusieurs premiers exemplaires dudit au moins un capteur de température;
- plusieurs deuxièmes exemplaires (28, 29, 30, 31, 32) dudit au moins un second soustracteur (19) générant un ensemble d'erreurs (ε_s, ε_Fe, ε_d, ε_r, ε_j) formé par plusieurs troisièmes exemplaires de ladite au moins une erreur de température (ε_{T}) en comparant respectivement des éléments d'un groupe de températures courantes (T_s, T_Fe, T_d, T_r, T_j) fournies par ledit groupe de capteurs aux éléments d'un groupe de températures maximales admissibles (Th_s, Th_Fe, Th_d, Th_r, Th_j) formées de plusieurs quatrièmes exemplaires de ladite au moins une température maximale admissible (Tₘₐₓ);
- des moyens de détermination (33) d'une erreur maximale (εₘₐₓ) parmi ledit ensemble d'erreurs (ε_s, ε_Fe, ε_d, ε_r, ε_j);
- un sélecteur (34) fournissant ladite erreur maximale (εₘₐₓ) audit module de commande (20).

4. Dispositif de pilotage (6) d'un alternateur (11) de véhicule automobile selon la revendication 3 précédente, **caractérisé en ce que**:
- ledit groupe de capteurs comprend au moins plusieurs éléments choisis parmi un premier capteur d'une première température (T_s) d'un stator dudit alternateur (11), un deuxième capteur d'une deuxième température (T_Fe) d'une carcasse dudit alternateur (11), un troisième capteur d'une troisième température (T_d) des diodes de redressement des courants de phases dudit alternateur (11), un quatrième capteur d'une quatrième température (T_r) dudit rotor, un cinquième capteur d'une cinquième température (T_j) d'une jonction (27) dudit commutateur à semi-conducteur (16);
- ledit groupe de températures courantes comprend au moins plusieurs valeurs courantes choisies parmi lesdites première, seconde, troisième, quatrième et cinquième températures (T_s, T_Fe, T_d, T_r, T_j);
- ledit groupe de températures maximales admissibles comprend au moins plusieurs valeurs de référence choisies parmi des première, seconde, troisième, quatrième et cinquième températures maximales admissibles (Th_s, Th_Fe, Th_d, Th_r, Th_j) correspondant auxdites première, seconde, troisième, quatrième et cinquième températures (T_s, T_Fe, T_d, T_r, T_j).

5. Dispositif de pilotage (6) d'un alternateur (11) de véhicule automobile selon la revendication 4 précédente, **caractérisé en ce que** ladite consigne de tension (U₀) est fonction de ladite cinquième température (T_j).

6. Dispositif de pilotage (5, 6) d'un alternateur (11) de véhicule automobile selon l'une quelconque des revendications 1 à 5 précédentes, **caractérisé en ce que** lesdits moyens de conditionnement (14) de ladite erreur de tension (εᵥ) comprennent des moyens de filtrage et d'ajustement d'un gain (k).

7. Dispositif de pilotage (5, 6) d'un alternateur (11) de véhicule automobile selon l'une quelconque des revendications 1 à 6 précédentes, **caractérisé en ce que** ladite boucle d'asservissement en tension (7, 8) et ladite boucle d'asservissement en température (17, 18) sont numériques.

8. Dispositif de pilotage (5, 6) d'un alternateur (11) de véhicule automobile selon l'une quelconque des revendications 1 à 7 précédentes, **caractérisé en ce qu'**il forme un ensemble monolithique intégrant ledit commutateur à semi-conducteur (16).

9. Dispositif de pilotage (5, 6) d'un alternateur (11) de véhicule automobile selon l'une quelconque des revendications 1 à 8 précédentes, **caractérisée en ce que** ladite loi de commande prédéterminée présente une pente d'environ - 5%/ °C entre - 20°C et 0°C.

10. Alternateur (11) de véhicule automobile comprenant un dispositif de pilotage (5, 6) selon l'une quelconque des revendications 1 à 9 précédentes.

## Patentansprüche

1. Vorrichtung zur Ansteuerung (5, 6) eines Wechselstromgenerators (11) eines Kraftfahrzeugs von der Art derjenigen, die eine von dem Wechselstromgenerator (11) erzeugte Gleichspannung (B+A) auf eine vorgegebene Sollspannung (U₀) regeln, indem sie die Stärke eines Erregerstroms (I_{EXC}) überwachen, der in einem Erregerkreis fließt, der eine Erregerwicklung eines Rotors des Wechselstromgenerators (11) umfasst, und ferner mindestens eine aktuelle Temperatur (T) der Komponenten des Wechselstromgenerators (11) unterhalb mindestens einer vorgegebenen höchstzulässigen Temperatur (Tₘₐₓ) hält, **dadurch gekennzeichnet, dass** sie einen Spannungsregelkreis (7, 8) umfasst, der Folgendes umfasst:
- Mittel zur Erfassung (12) der Gleichspannung (B+A), die eine gemessene Spannung (U_{b+}) ausgeben;
- einen ersten Subtrahierer (13) der gemessenen Spannung (U_{b+}) von der Sollspannung (U₀), der einen Spannungsfehler (εᵥ) erzeugt;
- Mittel zur Konditionierung (14) des Spannungsfehlers (εᵥ);
- ein Sättigungsmodul (21), das in Abhängigkeit von dem Spannungsfehler (εᵥ) im Eingang einen Erregungsprozentsatz (r) im Ausgang ausgibt, der auf einen höchstzulässigen Erregungsprozentsatz (rₘₐₓ) begrenzt ist;
- einen Generator (15) eines pulsweitenmodulierten (PWM) Signals, das ein Tastverhältnis gleich dem Erregungsprozentsatz (r) aufweist;
- einen Halbleiterschalter (16), der von dem pulsweitenmodulierten (PWM) Signal angesteuert wird, das die Stromstärke (I_{EXC}) überwacht;
und dass sie ferner einen Temperaturregelkreis (17, 18) umfasst, der Folgendes umfasst:
- mindestens einen Temperatursensor, der die mindestens eine aktuelle Temperatur (T) der Komponenten ausgibt;
- mindestens einen zweiten Subtrahierer (19) der mindestens einen aktuellen Temperatur (T) von der mindestens einen höchstzulässigen Temperatur (Tₘₐₓ), der mindestens einen Temperaturfehler (ε_{T}) erzeugt;
- ein Steuermodul (20), das den höchstzulässigen Erregungsprozentsatz (rₘₐₓ) in Abhängigkeit von dem mindestens einen Temperaturfehler (ε_{T}) nach einem vorgegebenen Steuerungsgesetz ausgibt.

2. Vorrichtung zur Ansteuerung (5) eines Wechselstromgenerators (11) eines Kraftfahrzeugs nach dem vorhergehenden Anspruch 1, **dadurch gekennzeichnet, dass** die mindestens eine aktuelle Temperatur (T) eine aktuelle Gehäusetemperatur eines Gehäuses des Wechselstromgenerators (11) oder aber eine aktuelle Lagertemperatur eines hinteren Lagers des Wechselstromgenerators (11) oder aber eine aktuelle Übergangstemperatur eines Übergangs (27) des Halbleiterschalters (16) ist, wobei die mindestens eine höchstzulässige Temperatur (Tₘₐₓ) eine vorgegebene höchstzulässige Gehäusetemperatur oder aber eine vorgegebene höchstzulässige Lagertemperatur oder aber eine vorgegebene höchstzulässige Übergangstemperatur ist und der mindestens eine Temperatursensor ein Gehäusetemperatursensor oder aber ein Lagertemperatursensor oder aber ein Übergangstemperatursensor ist.

3. Vorrichtung zur Ansteuerung (6) eines Wechselstromgenerators (11) eines Kraftfahrzeugs nach dem vorhergehenden Anspruch 1, **dadurch gekennzeichnet, dass** der Temperaturregelkreis (18) Folgendes umfasst:
- eine Gruppe von Sensoren, die aus mehreren ersten Exemplaren des mindestens einen Temperatursensors gebildet ist;
- mehrere zweite Exemplare (28, 29, 30, 31, 32) des mindestens einen zweiten Subtrahierers (19), die eine Menge von Fehlern (ε_s, ε_Fe, ε_d, ε_r, ε_j) erzeugen, die aus mehreren dritten Exemplaren des mindestens eine Temperaturfehlers (ε_{T}) gebildet ist, indem jeweils Elemente einer Gruppe von aktuellen Temperaturen (T_s, T_Fe, T_d, T_r, T_j), die von der Gruppe von Sensoren ausgegeben werden, mit den Elementen einer Gruppe von höchstzulässigen Temperaturen (Th_s, Th_Fe, Th_d, Th_r, Th_j) verglichen werden, die von mehreren vierten Exemplaren der mindestens einen höchstzulässigen Temperatur (Tₘₐₓ) gebildet werden;
- Mittel zur Bestimmung (33) eines maximalen Fehlers (εₘₐₓ) unter der Menge von Fehlern (ε_s, ε_Fe, ε_d, ε_r, ε_j);
- einen Wähler (34), der den maximalen Fehler (εₘₐₓ) an das Steuermodul (20) ausgibt.

4. Vorrichtung zur Ansteuerung (6) eines Wechselstromgenerators (11) eines Kraftfahrzeugs nach dem vorhergehenden Anspruch 3, **dadurch gekennzeichnet, dass**:
- die Gruppe von Sensoren mindestens mehrere Elemente umfasst, die unter einem ersten Sensor für eine erste Temperatur (T_s) eines Stators des Wechselstromgenerators (11), einem zweiten Sensor für eine zweite Temperatur (T_Fe) eines Gehäuses des Wechselstromgenerators (11), einem dritten Sensor für eine dritte Temperatur (T_d) der Gleichrichterdioden für die Phasenströme des Wechselstromgenerators (11), einem vierten Sensor für eine vierte Temperatur (T_r) des Rotors, einem fünften Sensor für eine fünfte Temperatur (T_j) eines Übergangs (27) des Halbleiterschalters (16) ausgewählt sind;
- die Gruppe von aktuellen Temperaturen mindestens mehrere aktuelle Werte umfasst, die unter den ersten, zweiten, dritten, vierten und fünften Temperaturen (T_s, T_Fe, T_d, T_r, T_j) ausgewählt sind;
- die Gruppe von höchstzulässigen Temperaturen mindestens mehrere Referenzwerte umfasst, die unter den ersten, zweiten, dritten, vierten und fünften höchstzulässigen Temperaturen (Th_s, Th_Fe, Th_d, Th_r, Th_j) ausgewählt sind, die den ersten, zweiten, dritten, vierten und fünften Temperaturen (T_s, T_Fe, T_d, T_r, T_j) entsprechen.

5. Vorrichtung zur Ansteuerung (6) eines Wechselstromgenerators (11) eines Kraftfahrzeugs nach dem vorhergehenden Anspruch 4, **dadurch gekennzeichnet, dass** die Sollspannung (U₀) von der fünften Temperatur (T_j) abhängig ist.

6. Vorrichtung zur Ansteuerung (5, 6) eines Wechselstromgenerators (11) eines Kraftfahrzeugs nach einem der vorhergehenden Ansprüche 1 bis 5, **dadurch gekennzeichnet, dass** die Mittel zur Konditionierung (14) des Spannungsfehlers (εᵥ) Mittel zur Filterung und Anpassung einer Verstärkung (k) umfassen.

7. Vorrichtung zur Ansteuerung (5, 6) eines Wechselstromgenerators (11) eines Kraftfahrzeugs nach einem der vorhergehenden Ansprüche 1 bis 6, **dadurch gekennzeichnet, dass** der Spannungsregelkreis (7, 8) und der Temperaturregelkreis (17, 18) digital sind.

8. Vorrichtung zur Ansteuerung (5, 6) eines Wechselstromgenerators (11) eines Kraftfahrzeugs nach einem der vorhergehenden Ansprüche 1 bis 7, **dadurch gekennzeichnet, dass** sie eine monolithische Anordnung bildet, die den Halbleiterschalter (16) beinhaltet.

9. Vorrichtung zur Ansteuerung (5, 6) eines Wechselstromgenerators (11) eines Kraftfahrzeugs nach einem der vorhergehenden Ansprüche 1 bis 8, **dadurch gekennzeichnet, dass** das vorgegebene Steuerungsgesetz ein Gefälle von etwa -5%/°C zwischen -20°C und 0°C aufweist.

10. Wechselstromgenerator (11) eines Kraftfahrzeugs mit einer Vorrichtung zur Ansteuerung (5, 6) nach einem der vorhergehenden Ansprüche 1 bis 9.

## Claims

1. Device (5, 6) for controlling a motor vehicle alternator (11) of the type of those automatically controlling a direct voltage (B+A) generated by said alternator (11) with respect to a predetermined voltage setpoint (U₀) by governing the intensity of an excitation current (I_{EXC}) flowing through an excitation circuit including an excitation winding for a rotor of said alternator (11) and furthermore holding at least one current temperature (T) of the components of said alternator (11) below at least one predetermined admissible maximum temperature (Tₘₐₓ), **characterized in that** it comprises a voltage automatic control loop (7, 8) including:
- means (12) for acquiring said direct voltage (B+A) providing a measured voltage (U_{b+});
- a first subtracter (13) of said measured voltage (U_{b+}) from said voltage setpoint (U₀) generating a voltage error (εᵥ);
- means (14) for conditioning said voltage error (εᵥ);
- a saturation module (21) providing, as a function of said input voltage error (εᵥ), an output excitation percentage (r) limited to a maximum admissible excitation percentage (rₘₐₓ) ;
- a generator (15) of a pulse width modulated (PWM) signal having a duty cycle equal to said excitation percentage (r);
- a semiconductor switch (16) controlled by said pulse width modulated (PWM) signal governing said intensity (I_{EXC});
and **in that** it further includes a temperature automatic control loop (17, 18) including:
- at least one temperature sensor providing said at least one current temperature (T) of said components;
- at least one second subtracter (19) of said at least one current temperature (T) from said at least one admissible maximum temperature (Tₘₐₓ) generating at least one temperature error (ε_{T});
- a control module (20) providing said maximum admissible excitation percentage (rₘₐₓ) as a function of said at least one temperature error (ε_{T}) according to a predetermined control law.

2. Device (5) for controlling a motor vehicle alternator (11) according to the preceding Claim 1, **characterized in that** said at least one current temperature (T) is a casing current temperature of a casing of said alternator (11) or a bearing current temperature of a rear bearing of said alternator (11) or a junction current temperature of a junction (27) of said semiconductor switch (16), said at least one admissible maximum temperature (Tₘₐₓ) is a predetermined casing admissible maximum temperature or a predetermined bearing admissible maximum temperature or a predetermined junction admissible maximum temperature, and said at least one temperature sensor is a casing temperature sensor or a bearing temperature sensor or a junction temperature sensor.

3. Device (6) for controlling a motor vehicle alternator (11) according to the preceding Claim 1, **characterized in that** said temperature automatic control loop (18) includes:
- a group of sensors that is formed from several first copies of said at least one temperature sensor;
- several second copies (28, 29, 30, 31, 32) of said at least one second subtracter (19) generating a set of errors (ε_s, ε_Fe, ε_d, ε_r, s_j) that is formed by several third copies of said at least one temperature error (ε_{T}) by comparing elements, respectively, of a group of current temperatures (T_s, T_Fe, T_d, T_r, T_j) provided by said group of sensors with the elements of a group of admissible maximum temperatures (Th_s, Th_Fe, Th_d, Th_r, Th_j) formed from several fourth copies of said at least one admissible maximum temperature (Tₘₐₓ);
- means (33) for determining a maximum error (εₘₐₓ) from said set of errors (ε_s, ε_Fe, ε_d, ε_r, s_j);
- a selector (34) providing said maximum error (εₘₐₓ) to said control module (20).

4. Device (6) for controlling a motor vehicle alternator (11) according to the preceding Claim 3, **characterized in that**:
- said group of sensors comprises at least several elements chosen from a first sensor of a first temperature (T_s) of a stator of said alternator (11), a second sensor of a second temperature (T_Fe) of a casing of said alternator (11), a third sensor of a third temperature (T_d) of the rectifier diodes for phase currents of said alternator (11), a fourth sensor of a fourth temperature (T_r) of said rotor, a fifth sensor of a fifth temperature (T_j) of a junction (27) of said semiconductor switch (16);
- said group of current temperatures comprises at least several current values chosen from said first, second, third, fourth and fifth temperatures (T_s, T_Fe, T_d, T_r, T_j);
- said group of admissible maximum temperatures comprises at least several reference values chosen from first, second, third, fourth and fifth admissible maximum temperatures (Th_s, Th_Fe, Th_d, Th_r, Th_j) corresponding to said first, second, third, fourth and fifth temperatures (T_s, T_Fe, T_d, T_r, T_j).

5. Device (6) for controlling a motor vehicle alternator (11) according to the preceding Claim 4, **characterized in that** said voltage setpoint (U₀) is a function of said fifth temperature (T_j).

6. Device (5, 6) for controlling a motor vehicle alternator (11) according to any one of the preceding Claims 1 to 5, **characterized in that** said means (14) for conditioning said voltage error (εᵥ) comprise means for filtering and for adjusting a gain (k).

7. Device (5, 6) for controlling a motor vehicle alternator (11) according to any one of the preceding Claims 1 to 6, **characterized in that** said voltage automatic control loop (7, 8) and said temperature automatic control loop (17, 18) are digital.

8. Device (5, 6) for controlling a motor vehicle alternator (11) according to any one of the preceding Claims 1 to 7, **characterized in that** it forms a monolithic assembly incorporating said semiconductor switch (16).

9. Device (5, 6) for controlling a motor vehicle alternator (11) according to any one of the preceding Claims 1 to 8, **characterized in that** said predetermined control law has a slope of approximately -5%/ºC between -20°C and 0°C.

10. Motor vehicle alternator (11) comprising a controlling device (5, 6) according to any one of the preceding Claims 1 to 9.
